Europäisches Patentamt

European Patent Office

Office européen des brevets

(19)

(11) Veröffentlichungsnummer: **0 380 994**
**A2**

## (12) EUROPÄISCHE PATENTANMELDUNG

(21) Anmeldenummer: **90101171.8**

(22) Anmeldetag: **20.01.90**

(51) Int. Cl.⁵: **G03B 21/11**

(30) Priorität: **02.02.89 DE 3903101**

(43) Veröffentlichungstag der Anmeldung:
**08.08.90 Patentblatt 90/32**

(84) Benannte Vertragsstaaten:
**AT BE DE FR GB IT NL**

(71) Anmelder: **Agfa-Gevaert AG**

**D-5090 Leverkusen 1(DE)**

(72) Erfinder: **Hackenberg, Hubert, Dipl.-Ing**
**Martin-Luther-Strasse 1**
**D-8150 Holzkirchen(DE)**
Erfinder: **Liermann, Traugott**
**Bussardstrasse 40**
**D-8025 Unterhaching(DE)**
Erfinder: **Nadler, Franz**
**Johannesweg 6**
**D-8041 Dietersheim(DE)**
Erfinder: **Plaschke, Herbert, Dipl.-Ing.**
**Graf-Toerring-Strasse 12**
**D-8031 Gernlinden(DE)**
Erfinder: **Schrecke, Hans Joachim**
**Zehentmeierstrasse 13a**
**D-8011 Grasbrunn(DE)**

(54) **Bildwand für Projektionskopiergerät.**

(57) Ein Projektionskopiergerät zur Abbildung mikroverfilmter Vorlagen auf einer lichtdicht abdeckbaren Bildwand und zur Anfertigung von rückvergrößerten Kopien der mikroverfilmten Vorlagen, wobei die Vorlagen ganz oder ausschnittweise mittels einer für das Kopieren von Strichvorlagen geeigneten Vorrichtung kopierbar sind, ist so ausgebildet, daß die Bildwand eine großflächige, an einer Streuscheibe (2) anliegende LCD-Scheibe (3) enthält und daß die LCD-Scheibe (3) zur Betrachtung von Vorlagen auf transparent und bei einem Kopier- und/oder Suchvorgang auf opak schaltbar ist.

Fig. 3

## Bildwand für Projektionskopiergerät

Die Erfindung betrifft ein Projektionskopiergerät zur Abbildung mikroverfilmter Vorlagen auf einer lichtdicht abdeckbaren Bildwand sowie zur Anfertigung von rückvergrößerten Kopien der mikroverfilmten Vorlagen, wobei die Vorlage ganz oder ausschnittweise mittels einer für das Kopieren von Strichvorlagen geeigneten Vorrichtung kopierbar ist.

In der DE-OS 33 09 578 ist ein Projektionskopiergerät beschrieben, das während des Kopiervorganges das Eindringen von Fremdlicht durch die Bildwand mittels eines Vorhanges verhindert, der die Bildwand lichtdicht abdeckt.

Anzeige und Auswahl von zu kopierenden Ausschnitten aus der Rückvergrößerung der mikroverfilmten Vorlagen erfolgt bei diesem Gerät mittels elektromechanischer Elemente, z.B. mittels zweier Potentiometer, deren Achsen je mit einem Zeiger gekoppelt sind.

Die Verwendung mechanischer bzw. elektromechanischer Bauteile hat die Nachteile zur Folge, daß die Wartungshäufigkeit, bedingt durch den Bauteileverschleiß, relativ hoch ist. Zusätzlich wird aufgrund der mechanischen Trägheit des Vorhangs beim Zuziehen die Kopierzykluszeit verlängert.

Der Erfindung liegt die Aufgabe zugrunde, eine in einem Projektionskopiergerät genutzte Bildwand so auszubilden, daß ein schnelles und verschleißfreies Umschalten erreicht wird zwischen einem Zustand, der das Eindringen von Fremdlicht verhindert, und einem Zustand, der die Projektion mikroverfilmter Vorlagen ermöglicht.

Diese Aufgabe wird erfindungsgemäß gelöst durch die Merkmale des Hauptanspruchs. Weitere vorteilhafte Merkmale der Erfindung sind den Unteransprüchen entnehmbar.

Ein besonderer Vorteil der Erfindung ist die durch den Einsatz einer LCD-Scheibe erreichbare Darstellung von frei programmierbaren Zeichen auf der Bildwand.

Die Erfindung wird anhand von Zeichnungen beispielhaft näher erläutert. Es zeigen

Fig. 1 eine Vorderansicht einer erfindungsgemäßen Bildwand,

Fig. 2 eine Seitenansicht einer erfindungsgemäßen Bildwand,

Fig. 3 eine Vorderansicht einer weiteren erfindungsgemäßen Bildwand mit angedeuteten Anzeigeelementen.

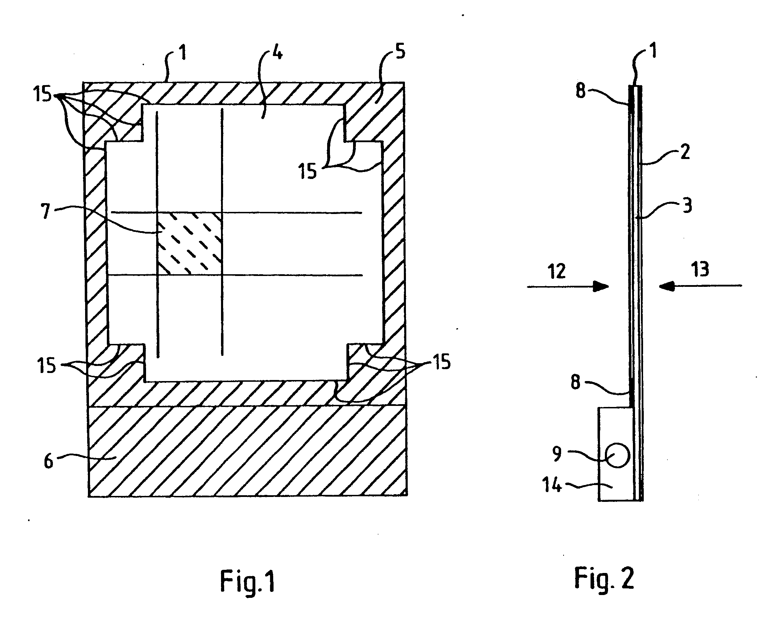

Figur 1 zeigt eine erfindungsgemäße Bildwand 1, die eine innerhalb von Grenzkanten 15 liegende Projektionsfläche 4, eine Randfläche 5 und eine Terminalfläche 6 umfaßt. In Figur 2 ist der schichtweise Aufbau der Bildwand 1 gezeigt. Dabei ist eine Streuscheibe mit 2, eine in Projektionsrichtung 12 vor der Streuscheibe 2 angeordnete LCD-Scheibe mit 3 und eine Leuchtfolie mit 8 bezeichnet.

Die Bedienung des Projektionskopiergerätes erfolgt über eine frei konfigurierbare Folientastatur 14, die in Figur 2 gezeigt ist, und die in Betrachtungsrichtung 13 hinter der mittels einer Lichtquelle 9 beleuchtbaren Terminalfläche 6 angeordnet ist.

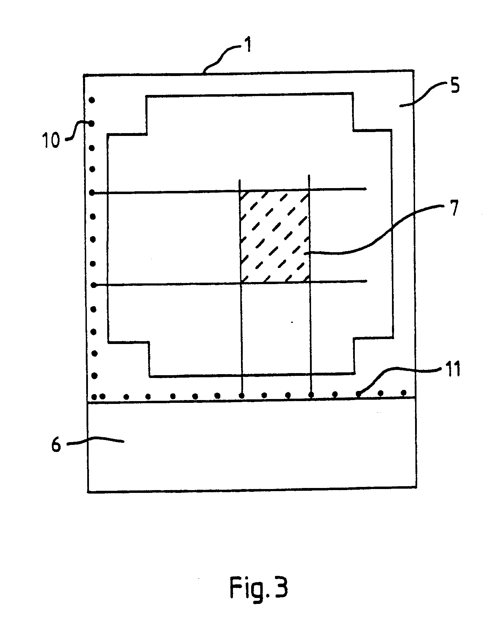

In den Figuren 1 und 3 ist ein zu kopierender Bildausschnitt mit 7 bezeichnet, er ist von der Bedienperson frei einstellbar. Mit Anzeigeelementen, die in der Randfläche 5 angeordnet sind, ist der Bildausschnitt 7 darstellbar, sie sind in Figur 3 in X-Richtung mit 11 und in Y-Richtung mit 10 bezeichnet.

Die Anzeige des Bildausschnitts 7 kann aber auch direkt mittels der LCD-Scheibe 3 erfolgen, indem diese im Bereich der Randfläche 5 pixel- oder segmentweise ansteuerbar ausgebildet ist.

Ist die LCD-Scheibe 3 nicht nur im Bereich der Randfläche 5 pixel- oder segmentweise ansteuerbar, sondern auch im Bereich der Projektionsfläche 4, kann der den Bildausschnitt 7 umgebende Teil der Projektionsfläche 4 auf opak geschaltet werden, während der Bildausschnitt 7 selbst transparent belassen wird. Damit besteht eine weitere Möglichkeit, den Bildausschnitt 7 anzuzeigen.

Die Funktion der Bildwand im Zusammemhang mit einem erfindungsgemäßen Projektionskopiergerät wird im folgenden erläutert. In einem Projektionskopiergerät werden mikroverfilmte Vorlagen mittels einer Projektionseinrichtung auf eine Streuscheibe 2 projiziert, die solche optischen Eigenschaften aufweist, daß ein für den Menschen lesbares Bild der projizierten Vorlage entsteht.

Besteht nun der Bedarf, eine bestimmte Vorlage zu kopieren, dann wird das projizierte Bild der Vorlage abgetastet und mittels eines Druckers auf Papier ausgedruckt. Während des Abtastvorgangs ist Fremdlicht, das über die Projektionsfläche 4 in das Projektionsgerät eindringen kann, störend. Des weiteren ist das Beobachten der durchlaufenden Bilder beim Positionieren auf die Bildadresse der nächsten zu projizierenden und/oder kopierenden, mikroverfilmten Vorlage für die Bedienungsperson ermüdend.

Ist nun die LCD-Scheibe 3 während des Kopiervorganges und des Positioniervorganges bzw. Suchvorganges auf opak geschaltet, so wird beim Kopieren das Eindringen von Fremdlicht unterbunden und beim Suchen das Entstehen von durchlaufenden Bildern auf der Streuscheibe 2 verhindert. Während des Kopiervorganges werden die zu seiner Steuerung nötigen Signale aus der Bildwand 1 selbst oder aus ihren Ansteuersignalen erzeugt. So werden die Signale "begin of scan" und "end of scan", die den Anfang und das Ende der Projektionsfläche 4 signalisieren, aus dem an den Grenzlinien 15 wechselnden Reflexionsgrad der Bildwandrückseite abgeleitet.

Aus den Ansteuersignalen für die Bildwand 1 bzw. die LCD-Scheibe 3 können Signale abgeleitet werden, die die Kopiervorrichtung bezüglich des Bildausschnittes 7 steuern.

Die den zu kopierenden Bildausschnitt 7 betreffenden Signale können auch direkt von einer zentralen Steuereinheit an die Kopiervorrichtung ausgegeben werden, wobei der durch sie definierte Bildausschnitt 7 auf eine der beschriebenen Arten auf der Bildwand 1 angezeigt wird.

Nach dem Kopieren und/oder Positionieren wird die LCD-Scheibe 3 auf transparent geschaltet und das Bild der mikroverfilmten Vorlage, deren Bildadresse gerade eingestellt ist, kann betrachtet werden.

Zusätzlich zu den Grundfunktionen - Opak-Schalten, Transparent-Schalten - sind innerhalb der Projektions fläche 4, während die mikroverfilmte Vorlage projiziert wird, Zeichen darstellbar, die bei einem Kopiervorgang mit auf die Kopie der Vorlage gedruckt werden, die z.B. der Zuordnung der Kopie zu einem Auftrag dienen können. Zudem sind außerhalb der Projektionsfläche 4 auf der Randfläche 5 und/oder der mittels einer Lichtquelle 9 beleuchtbaren Terminalfläche 6 Zeichen bzw. Informationen darstellbar, die den Bediener führen und/oder ihm Aufschluß über filmspezifische Daten geben (z.B. Bildadresse, Blip usw.).

Das Schalten der Randfläche 5, invers zu dem Wechsel der Projektionsfläche 4, von opak auf transparent und umgekehrt vor und nach einem Kopiervorgang zur Schonung der Augen der Bedienperson ist eine weitere Funktion, die den Bedienungskomfort des Projektionskopiergerätes erhöht.

Schließlich wird durch die Integration einer Folientastatur 14 in das beleuchtbare Terminalfeld 6 eine bedienerfreundliche und übersichtliche Zusammenfassung aller für die Bedienung des Projektionskopiergeräts notwendigen Elemente erreicht, wodurch eine optimale Bedienung ermöglicht wird.

**Ansprüche**

1. Projektionskopiergerät zur Abbildung mikroverfilmter Vorlagen auf einer lichtdicht abdeckbaren Bildwand sowie zur Anfertigung von rückvergrößerten Kopien der mikroverfilmten Vorlagen, wobei die Vorlage ganz oder ausschnittweise mittels einer für das Kopieren von Strichvorlagen geeigneten Vorrichtung kopierbar ist, dadurch gekennzeichnet, daß die Bildwand (1) eine großflächige, an einer Streuscheibe (2) anliegende LCD-Scheibe (3) enthält, und daß die LCD-Scheibe (3) zur Betrachtung von Vorlagen auf transparent und bei einem Kopier- und/oder Suchvorgang auf opak schaltbar ist.

2. Vorrichtung nach Anspruch 1, dadurch gekennzeichnet, daß die Bildwand (1) eine Projektionsfläche (4), eine mit einer Leuchtfolie (8) unterlegte Randfläche (5) und eine mittels einer Lichtquelle (9) beleuchtbare Terminalfläche (6) einschließt.

3. Vorrichtung nach einem der vorhergehenden Ansprüche, dadurch gekennzeichnet, daß auf der Randfläche (5) und der Terminalfläche (6) Daten anzeigbar sind, die zur Bedienerführung, zur Bezeichnung eines zu kopierenden Bildausschnittes (7) und zur Darstellung filmspezifischer Informationen dienen.

4. Vorrichtung nach einem der vorhergehenden Ansprüche, dadurch gekennzeichnet, daß Zeichen, die zusätzlich zur mikroverfilmten Vorlage auf die Kopie der Vorlage schreibbar sein sollen, innerhalb der Projektionsfläche (4) darstellbar sind.

5. Vorrichtung nach einem der Ansprüche 2 bis 4, dadurch gekennzeichnet, daß die Teile der Randfläche (5), die nicht zur Darstellung von Daten genutzt sind, invers zur Projektionsfläche (4) opak bzw. transparent schaltbar sind.

6. Vorrichtung nach den Ansprüchen 2 bis 5, dadurch gekennzeichnet, daß in die Terminalfläche (6) eine, in Betrachtungsrichtung (13) hinter der Terminalfläche (6) angeordnete, frei konfigurierbare Folientastatur (14) integrierbar ist.

7. Vorrichtung nach einem der Ansprüche 2 bis 6, dadurch gekennzeichnet, daß die Grenzkanten (15) zwischen Projektionsfläche (4) und Randfläche (5) zur Markierung eines "begin of scan" und "end of scan" für die Vorrichtung zum Kopieren der Vorlagen dient.

8. Vorrichtung nach einem der vorhergehenden Ansprüche, dadurch gekennzeichnet, daß die LCD-Scheibe (3) im Bereich der Projektionsfläche (4) segment- bzw. pixelweise von opak auf transparent und umgekehrt schaltbar ist, wo durch die Umgebung eines frei wählbaren Bildausschnittes (7) auf opak und der Bildausschnitt (7) selbst auf transparent schaltbar ist.

9. Vorrichtung nach Anspruch 8, dadurch gekennzeichnet, daß eine in den Signalen zur Ansteuerung der LCD-Scheibe (3) enthaltene Information über den Bildausschnitt (7) beim abschnittweisen Kopieren, zur Steuerung der Vorrichtung zum Kopieren der Vorlage genutzt wird.

10. Vorrichtung nach einem der Ansprüche 2 bis 9, dadurch gekennzeichnet, daß der Bildausschnitt (7) mittels einer Vielzahl von Anzeigeelementen, in X-Richtung (11 ) und in Y-Richtung (10), die in der Randfläche (5) angeordnet sind, anzeigbar ist.

Fig. 2

Fig.1

Fig. 3